# EUROPEAN PATENT APPLICATION

(11) **EP 2 848 910 A1**
(43) Date of publication of application: **18.03.2015**
(21) Application number: 13184179.3
(22) Date of filing: 12.09.2013
(51) Int. Cl.: G01M 5/00, G01M 7/00

(54) **Adjusting a load of a rotor blade in a fatigue test**

(71) Applicant: Siemens Aktiengesellschaft, 80333 München (DE)
(72) Inventor: Egedal, Per, 7400 Herning (DK); Hedegaard, Lars, 9000 Aalborg (DK); Hvejsel, Christian Frier, 9000 Aalborg (DK); Krogsgaard, Mads, 7100 Vejle (DK)

(57) **Abstract**

The invention relates to a method for controlling the mean load of a rotor blade (10) in a fatigue test, the rotor blade (10) comprising a tip (12) and a root (13). The root (13) is firmly attached to a support structure (25) during the fatigue test. The fatigue test comprises a cyclic movement of the rotor blade (10), wherein the cyclic movement is generated by an exciter (20). The rotor blade (10) is acting as a cantilever beam. The rotor blade (10) comprises a longitudinal rotor blade axis (11) extending from the root (13) to the tip (12). The device comprises means for applying at least a first force to the rotor blade (10). Finally, the first force is directed to a first direction (33), which is substantially opposite to a direction of a gravitational force (19) of the rotor blade (10), such that the load and the load range of the rotor blade (10) during the fatigue test is adjusted. The invention furthermore relates to a use of an arrangement as described above. Finally, the invention relates to an arrangement of adjusting a load of a rotor blade (10) in a fatigue test.

## Description

The present invention relates to adjusting the load of a rotor blade during a fatigue test, e.g. a highly accelerated life test. In other words, the invention aims to improve fatigue tests for rotor blades, in particular resonance-based rotor blade fatigue test.

### BACKGROUND OF THE INVENTION

In order to test whether rotor blades of a wind turbine withstand fatigue design limits, the rotor blades are tested by fatigue tests such as highly accelerated life tests (HALT). Such a fatigue test can for instance be performed by using an exciter causing the rotor blade to move in a desired way. Typically, the desired movement of the rotor blade is such that a rotating mass of the exciter is set at a frequency close to a natural frequency of the combined system comprising the exciter and the tested rotor blade. Hence, a high self-excitation of the combined system may occur.

Additionally, it is possible to distribute further weights strategically along the rotor blade in order to best possibly emulate a load distribution of the rotor blade such as it will be experienced by the rotor blade under operation.

A disadvantage of current fatigue tests is that a dead weight mass of the rotor blade itself adds a pre-load to the test. This influences the mean moment of the rotor blade, in particular adds an additional mean moment to the cyclic fatigue test. In the case that additional weights are distributed along the rotor blade in order to best possibly emulate realistic target loads of the rotor blade, additional dead weight masses are added as pre-load to the rotor blade.

As a consequence, the rotor blade under test may fail under the cyclic fatigue test, even though its fatigue limit is not yet reached. Until now, a satisfying solution to overcome this issue has not been found yet.

For instance, the problem has so far been solved by testing the rotor blade in several sittings. During these sittings a tip section of the rotor blade may be removed. Alternatively, different arrangements of the additional masses may be realized. Furthermore, it has widely been accepted that the mean moment which comes out of conventional fatigue tests does not necessarily correspond precisely with the mean moment loading of the rotor blade during operation.

Thus, there exists an urgent need to develop means to adjust the load of a rotor blade in a fatigue test, and to thus improve the fatigue test.

### SUMMARY OF THE INVENTION

This objective is achieved by the independent claims. The dependent claims describe advantageous developments and modifications of the invention.

In accordance with the invention there is provided an arrangement for adjusting a load of a rotor blade in a fatigue test. The rotor blade comprises a tip and a root, wherein the root is firmly attached to a support structure during the fatigue test. The arrangement comprises the rotor blade and a device which is coupled to the rotor blade. The fatigue test comprises a cyclic cantilevered movement of the rotor blade, wherein the cyclic movement is generated by an exciter and the rotor blade is acting as a cantilever beam. Furthermore, the rotor blade comprises a longitudinal rotor blade axis extending from the root to the tip. The device comprises means for applying at least a first force to the rotor blade. Furthermore, the first force is directed to a first direction, which is substantially opposite to a direction of a gravitational force of the rotor blade, such that the load of the rotor blade during the fatigue test is adjusted.

In other words, the device comprises means for applying at least one alternating external load to the rotor blade. The rotor blade, which is tested during the fatigue test, has a certain mass. The mass of the rotor blade is also referred to as the dead weight or the dead weight mass of the rotor blade. Due to gravitational force, there is a load on the rotor blade. In particular when the rotor blade is positioned substantially horizontally, the load of the rotor blade may achieve a considerable value. This load due to the dead weight of the rotor blade is also referred to as a pre-load.

Note that the given pre-load of the rotor blade may also comprise further components such as the load due to distributed dead weight masses as well as the mass of the exciter.

As the root of the rotor blade is firmly attached to a support structure during the fatigue test, also a bending moment, characterized by a lever and a force, may be generated. When the rotor blade performs the cantilevered deformation a time-dependent bending moment is generated.. This time-dependent bending moment does not contribute to the mean bending moment during the test, thus the mean bending moment only comprises components due to the pre-load.

The pre-load, which is also denoted as an absolute load, is aimed to be controlled in order to match operating conditions as closely as possible in the fatigue test. In the case that the rotor blade is positioned horizontally, the gravitational force of the rotor blade is pointing downwards.

It may be advantageous to have more than one force directed in the first direction. Exemplarily, a plurality of forces is applied along the rotor blade, all pointing at least partly in the first direction.

In an advantageous embodiment, the dead weight mounted closest to the blade root is divided into two parts; one moving in the same direction as the rotor blade, and one moving in the opposite direction. In this way it is possible to control the mean moment of the rotor blade, without affecting the time varying load range.

In other words, it is advantageous if the first weight is moving in substantially opposite direction with regard to the rotor blade while the rotor blade is performing the cyclic movement.

In another advantageous embodiment, the first weight is connected to the rotor blade between the root and the exciter.

The preferred position of the first weight, i.e. the first force, depends on the actual load range of the rotor blade. The first weight does not necessarily have to be connected between the root and the exciter. However, for most typical applications it is advantageous to place the first weight between the root and the exciter.

In principle, the invention applies to any rotor blade positions, e.g. horizontal or vertical position.

Advantageously, the rotor blade is positioned such that during the cyclic movement a mean angle between the longitudinal rotor blade axis and the gravitational force of the rotor blade is between 80 degrees and 100 degrees.

In other words, it is advantageous if the rotor blade is positioned substantially horizontally. This means that during a resting state, e. g. before or after the cycling movement, the rotor blade is substantially horizontal. In case of a symmetrical periodic cyclic movement it can also be expressed that a mean position of the rotor blade is substantially horizontal.

It may however be advantageous to mount the rotor blade slightly tilted upwards, for instance in order to prevent the rotor blade for hitting a ground during the fatigue test. Then, the mean angle might be in the range between 95 and 97 degrees, i.e. the rotor blade may be tilted between 5 and 7 degrees upwards with regard to a horizontal position.

In another advantageous embodiment, the rotor blade comprises a pressure side and a suction side, wherein the pressure side is pointing in a direction which is substantially opposite to the direction of the gravitational force of the rotor blade. Additionally, the suction side is pointing in a direction which is substantially parallel to the direction of the gravitational force of the rotor blade.

Such an arrangement with the pressure side pointing upwards and the suction side pointing downwards is beneficial as typically fatigue loads are best possibly emulated and measured that way.

It is also possible to perform an edgewise test which involves excitation of the rotor blade in parallel to the chord of the rotor blade. In this case, the rotor blade may also be mounted with the pressure side facing upwards and the suction side facing downwards; however, a different exciter which is then rotating in a horizontal plane is advantageously used.

Alternatively, it may also be possible to place the suction side such that it is pointing in a direction which is substantially opposite to the direction of the gravitational force of the rotor blade and the pressure side such that it is pointing in a direction which is substantially parallel to the direction of the gravitational force of the rotor blade.

In another advantageous embodiment, a maximum deflection of the tip during the cyclic movement compared to a position of the tip during a resting state of the rotor blade comprises a deflection angle smaller than 20 degrees, in particular smaller than 15 degrees.

As an example, for a 75 meters long rotor blade a maximum deflection might be in the range between 15 and 25 meter during the fatigue test.

In another advantageous embodiment, the device comprises at least a second weight which is moving in substantially the same direction to the rotor blade during the cyclic movement.

In order to best possibly emulate a target load of the rotor blade, the target load being defined as the load which is supposed to be supported by the rotor blade during its life time, it is advantageous to place at least a second weight on the rotor blade. In practice, a plurality of further weights might be added. This allows setting a load along a broad range of the rotor blade between the root and the tip. The second weight may just be placed and attached to the rotor blade. Thus, during the cyclic movement, the second weight always moves in the same direction as the rotor blade itself.

It has to be noted that by the second weight, or the plurality of further weights, the load along the length of the rotor blade is influenced. Additionally, a mean load is added to the rotor blade. However, this mean load is at least partly encountered and reduced by the first force, which is directed to the first direction. In other words, due to the first force, the mean value of the load of the rotor blade can be controlled; regardless if additional weights such as a second weight has been further added due to best possibly emulate the target load range along the rotor blade.

In another advantageous embodiment, a first mass of the first weight, a second mass of the second weight, and a position of the second weight along the rotor blade longitudinal axis are chosen such that an actual load of the rotor blade during the fatigue test is approaching a target load of the rotor blade. Thus, the load range of the rotor blade can be controlled. The actual load of the rotor blade is defined as the load which is present or which is experienced by the rotor blade during the fatigue test. This includes a pre-load due to the dead weight of the rotor blade itself and the second weight; this also includes the first force which is able to reduce the pre-load. It is advantageous if the actual load equals or approaches the target load of the rotor blade. In other words, the ratio between the actual load and the target load beneficially approaches unity.

The actual load of the rotor blade may be determined by strain gauges mounted along the rotor blade to measure strain during the fatigue test. Prior to the fatigue test the strain gauges may have been calibrated by applying a known static force to the rotor blade to match strain with load in a given rotor blade position.

It should also be noted that by the choice of the second weight and the position of the second weight the target load can be influenced advantageously. If this were not done, one part of the rotor blade might encounter loads, which are significantly higher than the target loads, while other parts of the rotor blade might not be tested at all.

In an advantageous embodiment, the device comprises a lever, and the lever comprises a beam, a tilting unit for tilting the beam about a tilting axis, and a first connecting means for attaching the beam to the rotor blade. The first connecting means is pivotable mounted to the rotor blade and to a first side of the beam. Additionally, the first weight is positioned on a second side of the beam which is opposite to the first side with regard to the tilting axis.

Descriptively spoken, the beam may be denoted as a rocking beam. The position and the mass of the first weight may be adjusted according to the target load which is targeted during the fatigue test. The connecting means may be a connecting rod. Advantageously, the connecting rod is stable enough to push the rotor blade up during the fatigue test, in particular during the cyclic movement.

Advantageously, the lever comprises a counterweight, which is positioned at the first side of the beam. Similarly to the first weight on the beam, also the counterweight may be adjusted with regard to position and mass in order to control the mean load and load range during the fatigue test.

In yet another advantageous embodiment, the device comprises a pulling tool with a second connection means. The second connection means attaches the first weight to the rotor blade, and the pulling tool redirects the first weight such that the first weight is moving in a substantially opposite direction to the rotor blade during the cyclic movement.

Descriptively spoken, the pulling tool may be denoted as a scaffold or a redirection unit. The second connection means may advantageously be a rope or a wire. The first weight may be redirected by two wheels, for instance two pulleys. Then, the first weight moves in the opposite direction of the rotor blade, hence a gravitational force of the first weight is pulling the rotor blade upwards.

In another advantageous embodiment, the rotor blade is a wind turbine rotor blade. The wind turbine rotor blade may be a part of a wind turbine.

In another advantageous embodiment the support structure is a hub of a wind turbine.

If the hub represents the support structure, an advantage is that a stability of the attachment of the rotor blade to the hub is also tested during the fatigue test.

The invention is also directed towards a use of such an arrangement as described above for performing a resonance-based rotor blade fatigue test.

Finally, the invention is also directed towards a method of adjusting a load of a rotor blade in a fatigue test by using an arrangement as described above.

Such a method advantageously comprises the following steps:
First, the plurality of further masses is distributed along the rotor blade to obtain the desired target load range. Second, it is calculated how much weight should be moving in an opposite direction of the rotor blade during the cyclic movement such that the actual mean load approaches best possibly the mean target load.

The aspect defined above and further aspects of the present invention are apparent from the examples of embodiments to be described hereinafter and are explained with reference to the examples of embodiment.

### BRIEF DESCRIPTION OF THE DRAWINGS

Embodiments of the invention are now described, by way of example only, with reference to the accompanying drawings, of which:
- Figure 1: shows a rotor blade with a pressure side facing upwards and a suction side facing downwards;
- Figure 2: shows the rotor blade with a leading edge facing upwards and a trailing edge facing downwards;
- Figure 3: shows a device for performing a fatigue test according to the state of the art;
- Figure 4: shows a device for reducing load of a rotor blade in a fatigue test with a lever;
- Figure 5: shows a device for reducing load of a rotor blade in a fatigue test with a pulling tool;
- Figure 6: shows loads of a rotor blade along a rotor blade longitudinal axis;
- Figure 7: shows a mean angle of a rotor blade, which is firmly attached to a support structure; and
- Figure 8: illustrates a deflection angle of a rotor blade, which is firmly attached to a support structure.

The illustrations in the drawings are schematically.

### DESCRIPTION OF THE DRAWINGS

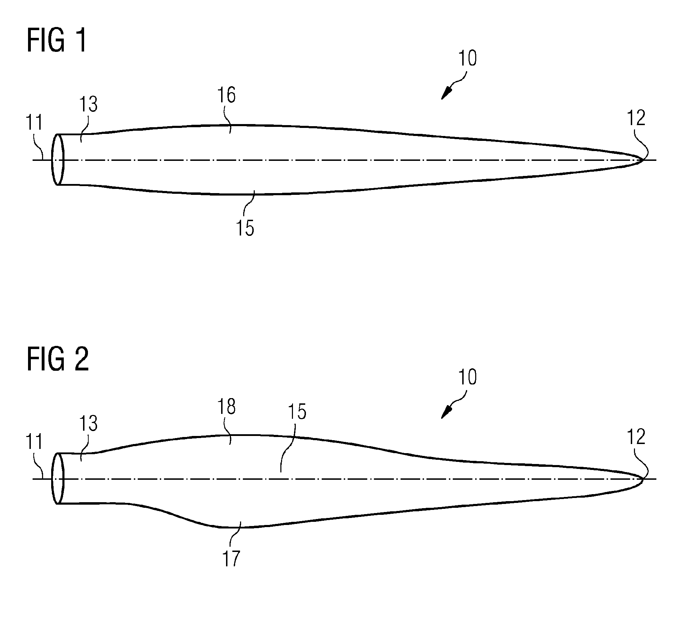

Figure 1 shows a rotor blade 10 with a tip 12 and a root 13. Between the tip 12 and the root 13 extends a rotor blade longitudinal axis 11. The rotor blade 10 furthermore comprises a suction side 15 and a pressure side 16.

Figure 2 shows the same rotor blade 10 as illustrated in Figure 1, but rotated about 90 degrees about the rotor blade longitudinal axis 11. Thus, a leading edge 18 and a trailing edge 17 can be seen.

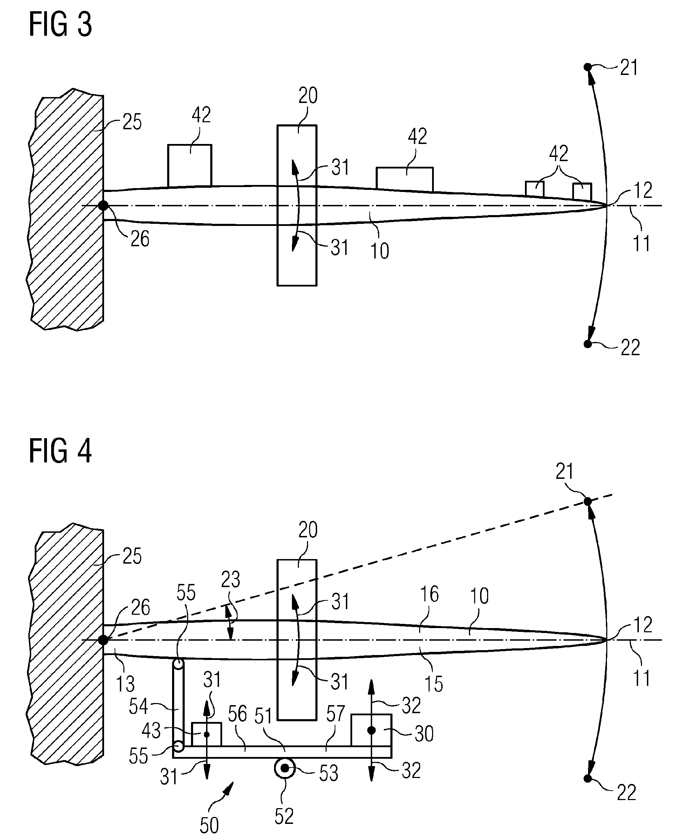

Figure 3 shows a typical arrangement for testing a rotor blade 10 during a fatigue test. The rotor blade 10 is firmly attached to a support structure 25, which in the concrete example of Figure 3 is a wall. By means of an exciter 20, which is positioned between the support structure 25 and a tip 12 of the rotor blade 10, the rotor blade 10 is excited to perform a cyclic movement. The cyclic movement is performed about a fixed support 26. The fixed support 26 can be characterized as an intersection of a rotor blade longitudinal axis 11 and the support structure 25. The exciter 20 excites the rotor blade 10 to perform cyclic movements upwards and downwards. A maximum positive deflection of the tip 12 is referenced by a point 21; a maximum negative deflection of the tip 12 is referenced by a point 22. A direction of the movement of the tip 12 is referenced by the arrows 31.

In order to achieve a load distribution along the rotor blade longitudinal axis 11, several further weights 42 are placed on the rotor blade 10. This leads to a good agreement between the actual load distribution and the target load distribution, but may lead to a mean load which is different from the mean load experienced during normal operation of the blade. A consequence is the disadvantages which have already been described in the background of the invention.

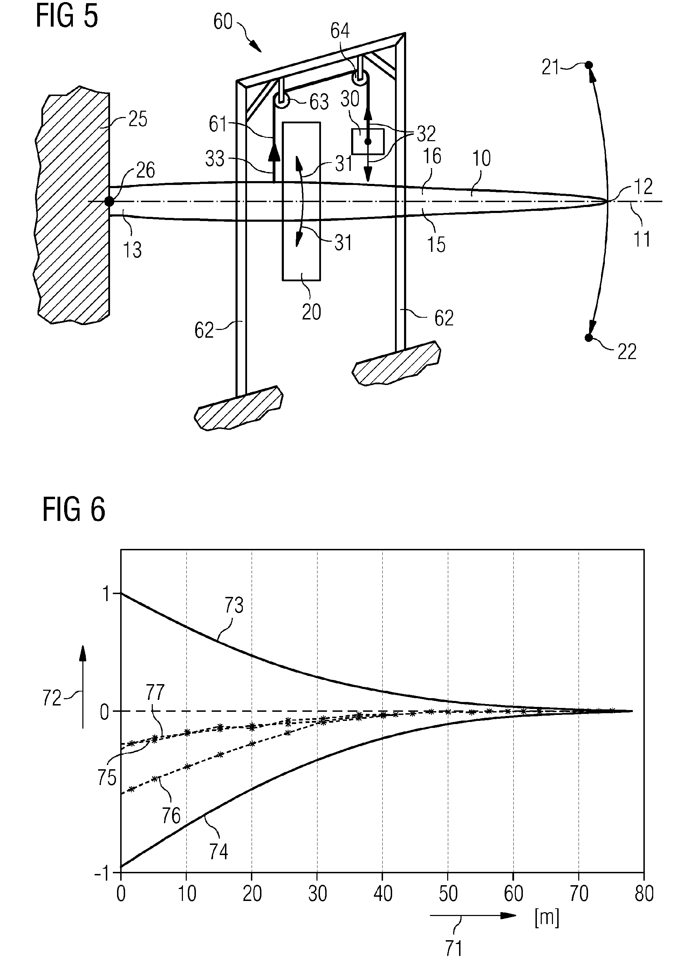

Figure 4 and Figure 5 show two embodiments of advantageous devices for reducing load of a rotor blade 10 in a fatigue test.

In both figures, a rotor blade 10 is firmly attached to a support structure 25 such that a pressure side 16 of the rotor blade 10 is facing upwards, and a suction side 15 of the rotor blade 10 is facing downwards. The rotor blade 10 furthermore comprises a tip 12 and a rotor blade longitudinal axis 11, which extends from the tip 12 to the root 13 of the rotor blade 10.

Both figures also show an exciter 20 which is arranged and prepared to excite the rotor blade 10 to perform cyclic movements about a fixed support 26. A maximum positive deflection of the tip 12 is denoted or illustrated by a point 21, while a maximum negative deflection of the tip 12 is illustrated by a point 22. In Figure 4, a deflection angle 23 is depicted, which is defined by the angle between the rotor blade longitudinal axis 11 at a resting state such as it is depicted in Figure 4, and the rotor blade longitudinal axis 11 at a state of maximum positive deflection of the tip 21. Concretely, a deflection angle 23 comprises 12 degrees in Figure 4. However, note that the rotor blade 10 does not rotate about the fixed support 26. The rotor blade 10 acts as a cantilever beam due to the flexibility of the rotor blade 10.

In Figure 4, the device for controlling the load comprises a lever 50, which comprises a beam 51 and a tilting unit 52. The tilting unit 52 is arranged and prepared to tilt the beam 51 about a tilting axis 53. Furthermore, the lever 50 comprises a first connecting means 54, which is pivotable mounted to the rotor blade 10 by a hinge 55, and which is pivotable mounted to a first side of the beam 56 by a hinge 55 as well. The first side 56 of the beam 51 is defined to be the side between the tilting unit 52 and the connecting means 54. There also exists a second side 57 of the beam 51, which is opposite to the first side 56 with regard to the tilting unit 52. At the second side 57, a first weight 30 with a first mass is placed. The first weight 30 is moving in an opposite direction with regard to the rotor blade 10 during the cyclic movement of the fatigue test. Finally, Figure 4 also shows a counterweight 43, which is placed at the first side 56 of the beam 51 and which is moving in the same direction 31 as the rotor blade 10 during the cyclic movements of the rotor blade 10.

Figure 5 shows another device for reducing load, which is referred to as a pulling tool 60. The pulling tool comprises a pulling tool support structure 62, a first wheel 63, a second wheel 64 and a second connection means 61 which connects a first weight 30 to the rotor blade 10. By redirecting the second connection means 61, which is exemplarily a wire in Figure 5, the first weight 30 moves in an opposite direction with regard to the rotor blade 10 during cyclic movements of the fatigue test.

Figure 6 shows a normalized flap wise fatigue load 72 in arbitrary units with regard to a blade position 71 scaled in meters. A first curve 73 illustrates a maximum positive design load 73 of a rotor blade 10. Likewise, a second curve shows a maximum negative design load 74 of the same rotor blade. A third curve 76 illustrates a mean load of the rotor blade 10 during the fatigue test, determined by a conventional measurement device.

As can be seen, the third curve 76 differs significantly from a fourth curve 75 which is a target mean load of the rotor blade 10, which is the mean load which the rotor blade will encounter during normal operation. The difference between the load determined by the conventional device 76 and the target load 75 comes from the fact that a pre-load due to a dead weight of the rotor blade itself plus additional loads due to a distributed plurality of further weights 42 which have been placed on the rotor blade 10 in order to achieve an optimal load distribution along the rotor blade longitudinal axis 11, is present. However, if a method controlling the mean load is used, the target load 75 can be well approached or approximated as can be seen by the curve 77, which illustrates the mean load obtained when using an inventive device for controlling the mean load.

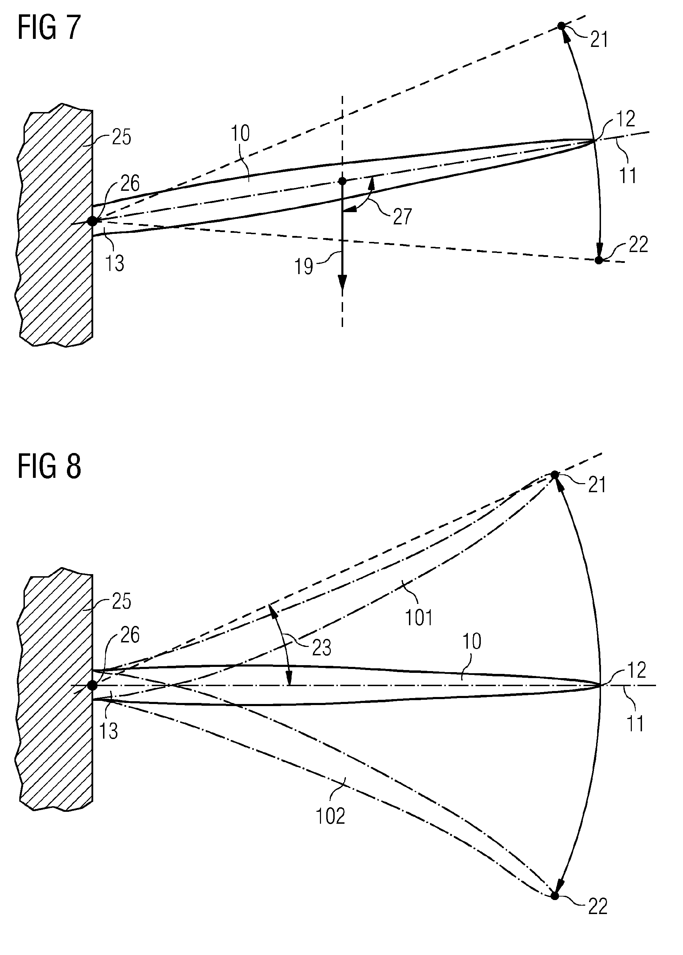

Figure 7 shows a rotor blade 10 which is firmly attached to a support structure 25 and which comprises a tip 12 and a rotor blade longitudinal axis 11, extending from the tip 12 of the rotor blade 10 to a root 13 of the rotor blade 10. As can be seen, the rotor blade 10 is mounted at a fixed support 26 in order to perform cyclic movements. A maximum positive deflection of the tip 12 is denoted by a point 21; likewise, a maximum negative deflection of the tip 12 is denoted by a point 22. Figure 7 shows that a mean angle 27 can be defined by the angle between the rotor blade longitudinal axis 11 and a gravitational force 19 of the rotor blade 10.

Finally, Figure 8 illustrates how the deflection angle 23 has to be understood. The rotor blade longitudinal axis 11 is defined as the line between the root 13 and the tip 12 of the rotor blade 10, regardless if the rotor blade 10 is in a neutral, undeformed state 100, or in a deformed state 101, 102. As the rotor blade 10 does not rotate about the fixed support 26 but acts as a cantilever beam due to its flexibility, the deflection angle 23 has thus to be understood as the angle between the rotor blade longitudinal axis 11 of the rotor blade at a resting state 100 and the rotor blade longitudinal axis 11 of the rotor blade at a state of maximum positive deflection of the tip 21.

## Claims

1. Arrangement for adjusting a load of a rotor blade (10) in a fatigue test, the rotor blade (10) comprising a tip (12) and a root (13),
wherein
- the arrangement comprises the rotor blade (10) and a device which is coupled to the rotor blade (10),
- the root (13) is firmly attached to a support structure (25) during the fatigue test,
- the fatigue test comprises a cyclic cantilevered movement of the rotor blade (10), wherein the cyclic movement is generated by an exciter (20) and the rotor blade (10) is acting as a cantilever beam,
- the rotor blade (10) comprises a longitudinal rotor blade axis (11) extending from the root (13) to the tip (12),
- the device comprises means for applying at least a first force to the rotor blade (10), and
- the first force is directed to a first direction (33), which is substantially opposite to a direction of a gravitational force (19) of the rotor blade (10), such that the load of the rotor blade (10) during the fatigue test is adjusted.

2. Arrangement according to claim 1,
wherein the first force is applied by a first weight (30), which is connected to the rotor blade (10), and which is moving in substantially opposite direction to the rotor blade (10) during the cyclic movement.

3. Arrangement according to claim 2,
wherein the first weight (30) is connected to the rotor blade (10) between the root (13) and the exciter (20).

4. Arrangement according to one of the preceding claims, wherein the rotor blade (10) is positioned such that, during the cyclic movement, a mean angle (27) between the longitudinal rotor blade axis (11) and the gravitational force (19) of the rotor blade (10) is between 80 degrees and 100 degrees.

5. Arrangement according to one of the preceding claims, wherein
- the rotor blade (10) comprises a pressure side (16) and a suction side (15), and
- the pressure side (16) is pointing in a direction which is substantially opposite to the direction of the gravitational force (19) of the rotor blade (10), and
- the suction side (15) is pointing substantially in the same direction as the gravitational force (19) of the rotor blade (10) .

6. Arrangement according to claim 2 to 5,
wherein the device comprises at least a second weight (41) which is moving in substantially the same direction to the rotor blade (10) during the cyclic movement.

7. Arrangement according to claim 6,
wherein a first mass of the first weight (30), a second mass of the second weight (41), and a position of the second weight (41) along the rotor blade longitudinal axis (11) are chosen such that an actual load of the rotor blade (10) during the fatigue test is approaching a target load (75) of the rotor blade (10), thus controlling a load range of the rotor blade (10).

8. Arrangement according to one of the claims 2 to 7, wherein
- the device comprises a lever (50),
- the lever (50) comprises a beam (51), a tilting unit (52) for tilting the beam (51) about a tilting axis (53), and a first connecting means (54) for attaching the beam (51) to the rotor blade (10),
- the first connecting means (54) is pivotable mounted to the rotor blade (10),
- the first connecting means (54) is pivotable mounted to a first side (56) of the beam (51), and
- the first weight (30) is positioned on a second side (57) of the beam (51) which is opposite to the first side (56) with regard to the tilting axis (53).

9. Arrangement according to claim 8,
wherein the lever (50) comprises a counterweight (43) which is positioned at the first side (56).

10. Arrangement according to one of the claims 2 to 7, wherein
- the device comprises a pulling tool (60) with a second connection means (61),
- the second connection means (61) attaches the first weight (30) to the rotor blade (10), and
- the pulling tool (60) redirects the first weight (30) such that the first weight (30) is moving in substantially opposite direction to the rotor blade (10) during the cyclic movement.

11. Arrangement according to one of the preceding claims, wherein the rotor blade (10) is a wind turbine rotor blade.

12. Arrangement according to one of the preceding claims, wherein the support structure (25) is a hub of a wind turbine.

13. Use of an arrangement according to one of the preceding claims for performing a resonance-based rotor blade fatigue test.

14. Method of adjusting a load of a rotor blade (10) in a fatigue test by using an arrangement according to claims 1 to 12.
